# EUROPEAN PATENT APPLICATION

(11) **EP 1 886 844 A1**
(43) Date of publication of application: **13.02.2008**
(21) Application number: 06756808.9
(22) Date of filing: 31.05.2006
(51) Int. Cl.: B60C 15/04, C22C 38/00, C22C 38/38, D07B 1/06

(54) **ANNULAR CONCENTRIC STRANDED BEAD CORD AND METHOD FOR PRODUCING SAME**

(30) Priority: 01.06.2005 JP 2005161199; 01.05.2006 JP 2006127398
(71) Applicant: Sumitomo (Sei) Steel Wire Corp., Itama-shi, Hyogo 664-0016 (JP); Sumitomo Electric Tochigi Co. Ltd., Utsunomiya-shi Tochigi 3213231 (JP)
(72) Inventor: OKAMOTO, Kenichi, Itami Works Sumitomo El. In. Ltd, Itami-shi, Hyogo 664-0016 (JP); SASABE, Hiroshi, Sumitomo Electric Tochigi Co. Ltd, Utsunomiya-shi, Tochigi 321-3231 (JP); WAKAHARA, Hitoshi, Sumitomo Elec. Tochigi Co Ltd, Utsunomiya-shi, Ibaraki 321-3231 (JP); SANO, Yuichi, Sumitomo Electric Tochigi Co. Ltd, Utsunomiya-shi, Tochigi 321-3231 (JP)
(74) Representative: Cross, Rupert Edward Blount
(86) International application number: PCT/JP2006/310875
(87) International publication number: WO 2006/129709

(57) **Abstract**

An object of the present invention is to impart long-lasting, stable corrosion resistance to an annular core of an annular concentric-lay bead cord at a low cost.

Corrosion-resistant coating is provided on the surface of the steel wire forming the annular core 1 to cover the surface of the steel wire with a thick coating film 3, thereby preventing exposure of the surface of steel wire even if fretting develops between the annular core 1 and the wrap wire 2. With this arrangement, it is possible to impart long-term, stable corrosion resistance to the annular core 1 at a low cost.

## Description

### Technical field

The present invention relates to a bead cord to be embedded in a bead of a pneumatic tire in order to reinforce the bead of the tire, and more specifically to a concentric-lay bead cord comprising an annular core and a single or a plurality of sheath layers formed by helically wrapping a wrap wire around the annular core, and a method of manufacturing such a bead cord.

### Background of the invention

Annular concentric-lay bead cords are widely used as reinforcements of the beads of various vehicle tires. In order to ensure stable shape and sufficient rigidity, many of such annular concentric-lay bead cords comprise an annular core comprising a large-diameter steel wire, and a single or a plurality of layers of a small-diameter wrap wire helically wrapped around the annular core.

The wrap wire of such a bead cord is ordinarily plated with brass or bronze to increase the adhesion between the wrap wire and the rubber of the tire. Typically, such plating is electroplating or replacement plating, and the thickness of the plating layer is about 0.2 to 0.3 µm. This is because the thinner the plating layer, the higher the adhesion between the wrap wire and the rubber of the tire. But because the annular core is typically bare, so that when the rubber of the tire becomes wet, it tends to corrode. Therefore, in order to improve the safety and performance of tires, it is now desired to increase the corrosion resistance of the annular core too.

In order to increase the adhesion between the annular core and the rubber of the tire, Patent document 1 proposes to subject the steel wire forming the annular core to the same type of plating as the plating on the wrap wire, and to increase the intervals between the adjacent portions of the wrap wire so that rubber of the tire reaches the core and is adhered to the core. With this arrangement, even if the rubber becomes wet, the annular core is said to be less likely to corrode due to adhesion between the annular core and rubber.

But actually, in the bead cord of Patent document 1, the intervals between the adjacent portions of the wrap wire tends to be uneven, so that rubber cannot completely cover the annular core. At portions where the annular core is not covered by rubber, the steel wire tends to soon develop rust because the thin plating layer, which is formed only to provide adhesion between the core and rubber, cannot impart sufficient corrosion resistance to the annular core. Such rust tends to spread to portions of the annular core covered by rubber. Particularly if such a bead cord is used in a vehicle tire, if fretting develops between the annular core and the wrap wire, the plating layer tends to wear out in a short period of time, thus deteriorating the corrosion resistance and spreading corrosion. It is possible to increase the thickness of the plating layer to some extent by repeating plating. But because neither electroplating nor replacement plating is an advantageous method for providing thick plating, work efficiency is low, which pushes up the cost.

In this arrangement, plating is carried out continuously while feeding a long steel wire. The thus plated long steel wire is cut to a predetermined length, the thus cut steel wire is bent annularly, and its ends are welded together to form the annular core. When the ends of the cut steel wire are welded together, the plating layer tends to be removed near both ends of the steel wire due to elusion or due to removal of burrs. Thus, the corrosion resistance of the annular core is low near their ends. One way to prevent this problem is to apply and fix molten metal to the ends of the steel wire where the plating layer has gone. But this is an expensive method. The metal fixed to the ends of the steel wire tends to lower the adhesion between the steel wire and rubber, too.

In Patent document 2, a bead cord is described of which the annular core is made of a high functional synthetic resin to reduce the weight of the cord. Since the annular core of this bead cord is made of synthetic resin, the corrosion resistance of the core improves. But the use of a high functional material pushes up the cost of the entire cord. Such a cord also poses problems regarding handling such as storage. An annular core made of nylon 6 or polyethylene naphthalate (PEN), which are mentioned in Examples of Patent document 2, will be insufficient in rigidity if its diameter is equal to the diameter of conventional steel annular cores. Thus, such cores are practically useless.
Patent document 1: JP patent publication 5-163686A
Patent document 2: JP patent publication 11-321247A

### Disclosure of the invention

### Problems to which the invention seeks a solution

An object of the invention is to stably impart corrosion resistance to the annular core of an annular concentric-lay bead cord for a long period of time at a low cost.

### Means to achieve the object

In order to achieve this object, according to the present invention, a corrosion-resistant coating film is formed on the steel wire forming the annular core.

Specifically, the surface of the steel wire forming the annular core is covered with a corrosion-resistant thick coating film so that even if fretting develops between the annular core and the wrap wire, the surface of the steel wire will not be exposed, thereby stably imparting corrosion resistance to the annular core for a long period of time at a low cost.

Preferably, the coating film has a smooth surface so that the wrap wire can be easily and uniformly wrapped around the annular core. This improves the formability of the bead cord.

Preferably, the coating film is formed on the surface of the steel wire forming the annular core over the entire circumference thereof to prevent local deterioration in corrosion resistance, which often occurs when the ends of the steel wire are welded together after plating.

Further preferably, the coating film has adhesion to at least one of a metal and a rubber so that when the bead cord is embedded in rubber of e.g. a tire as a reinforcing material, the steel wire is less likely to separate from the rubber during use. The cord can thus maintain high corrosion resistance for a long period of time.

The coating film preferably has a thickness of 10 to 200 µm. If the coating film has a thickness of less than 10 µm, corrosion resistance tends to be insufficient. If over 200 µm, smoothness of the surface of the annular core may be lost, thus making it more difficult to wrap the wrap wire around the annular core. Also, if the coating film is too thick, the diameter of the steel wire has to be correspondingly reduced, which makes it difficult to achieve sufficient strength and rigidity as the bead cord. More preferably, the coating film has a thickness of 20 to 120 µm.

The steel wire forming the annular core is preferably made of an alloy steel comprising 0.08 to 0.27 wt% of C; 0.50 to 2.00 wt% of Si; 0.50 to 2.00 wt% of Mn; 0.20 to 2.00 wt% of Cr; and 0.001 to 0.10 wt% of at least one of Al, Nb, Ti and V; the balance being Fe and inevitably mixed impurities. In this alloy steel, the C content is substantially as low as that of mild steel, the contents of Si and Mn are higher than those of ordinary carbon steel, and an appropriate amount of Cr is added to ensure weldability and strength necessary for the bead cord. Also, by adding at least one of Al, Nb, Ti and V in an appropriate amount, sufficient ductility after welding is ensured. If the content of any of the three components Si, Mn and Cr is lower than the above prescribed range, the strength of the annular core tends to be insufficient. If the Si content is higher than the prescribed range, defects tend to develop. If the Mn content is higher than the prescribed range, formability deteriorates. The Cr content was determined within the above range for improved hardenability and from an economical viewpoint. If the content of the at least one of Al, Nb, Ti and V is lower than the prescribed range, ductility hardly improves. If higher than the prescribed range, nitrides and sulfides of these elements will deteriorate ductility.

Because the annular core comprising a steel wire made of such alloy steel has high strength and excellent ductility, it is possible to omit the annealing step after welding the ends of the steel wire.

The steel wire forming the annular core may be made of carbon steel containing 0.28 to 0.56 wt% of C. Such carbon steel also has required strength and ductility after welding. Thus, for an annular core comprising a steel wire made of such carbon steel, too, it is possible to omit the annealing step.

When manufacturing the bead cord, the coating film is preferably formed on the surface of the steel wire forming the annular core by electrostatic powder coating so that a smooth surface can be formed on the coating film more easily than with ordinary coating and the wrap wire can be more easily wrapped around the annular core. A coating material used in such electrostatic powder coating preferably has an electrical resistivity of 10¹⁰ to 10¹⁶ Ωcm so that the coating film can be formed efficiently and uniformly. If the electrical resistivity of the coating material is below this range, the statistic build-up in the coating material during coating tends to be insufficient, so that the coating tends to separate from the steel wire. If higher than this range, the coating efficiency will deteriorate.

### Advantages of the invention

Because the annular concentric-lay bead cord according to the present invention has a corrosion-resistant coating film formed on the surface of the steel wire forming the annular core, it stably shows corrosion resistance for a long period of time at a low cost. Unlike the abovementioned conventional bead cord of which the annular core is made of a resin, the bead cord according to the present invention can be stored easily and has enough rigidity. The bead cord according to the present invention can therefore be advantageously used in vehicle tires, for which high level of safety and high performance are required.

Because the coating film has a smooth surface, the wrap wire can be uniformly wrapped around the annular core. This improves formability of the bead cord.

### Brief description of the drawings

Fig. 1a is an external view of the bead cord embodying the present invention;
Fig. 1b is an enlarged perspective view of Fig. 1a;
Fig. 1c is an enlarged sectional view of Fig. 1a;
Fig. 2 schematically shows how electrostatic powder coating is carried out; and
Fig. 3 is a flowchart showing the steps of electrostatic powder coating.

### Description of reference numerals

1. Annular core
2. Wrap wire
3. Coating film
4. Annular core
5. Corona discharge electrode
6. Negative ion
7. Powder coating particle
8. Electric line of force
9. Powder coating layer

### Best mode for embodying the invention

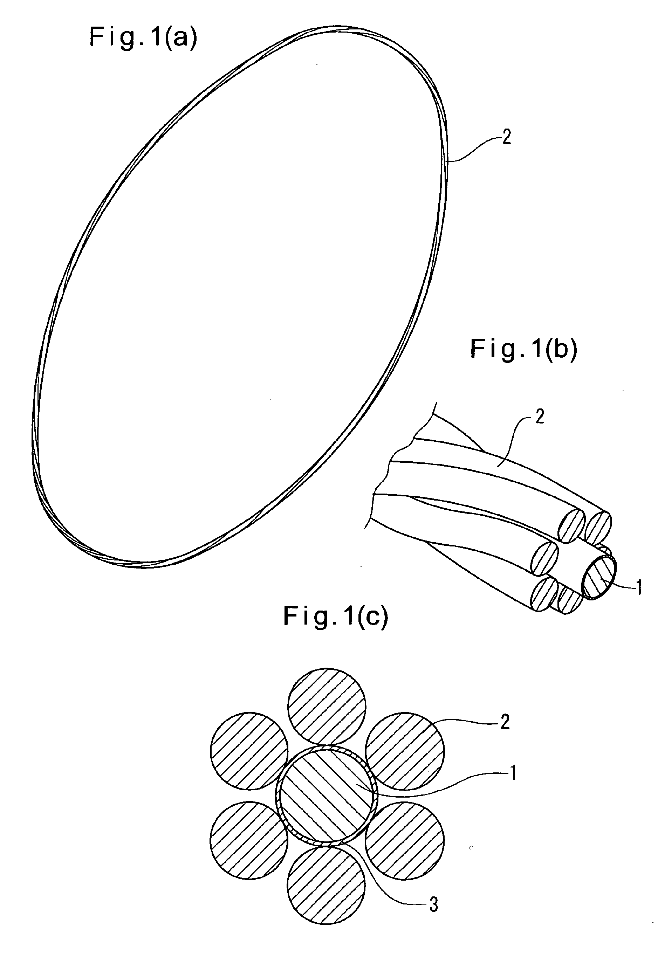

Now referring to the drawings, an embodiment of the present invention is described. As shown in Figs. 1(a) to 1(c), the annular concentric-lay bead cord of the embodiment includes an annular core 1 and a wrap wire 2 helically wound six times around the annular core 1. In the embodiment, the wrap wire 2 forms a single sheath layer. But the wrap wire 2 may form a plurality sheath layers.

The annular core 1 is formed by annularly bending a steel wire, welding their ends together, and applying a corrosion-resistant coating to the surface of the steel wire to form a corrosion-resistant coating film 3 on the surface of the steel wire over the entire circumferential length thereof. The coating film 3 is formed so that its surfaced is smooth by selecting a suitable coating method and adjusting its thickness. The wrap wire 2 can thus be smoothly wrapped around the annular core 1.

The wrap wire 2 is made of high-carbon steel and has a smaller diameter than the annular core 1. With one end of the wrap wire 2 temporarily fastened to the annular core 1 by a sheet of unvulcanized rubber of the same type as the rubber of the tire, the wrap wire 2 is continuously wound a plurality of times around the annular core, and the temporarily fastened end of the wrap wire 2 and its other end are joined together with a brass sleeve.

Description is now made of an evaluation test conducted to confirm the various advantages of the present invention. As shown in Table 1, different kinds of steel wires to be formed into annular cores of bead cords were prepared, and annular cores were formed from these steel wires. The annular cores had coating films formed thereon from different materials by different methods and having different thicknesses from each other. Each annular core was evaluated for smoothness of its surface, corrosion resistance of the core, and resistance to breakage of the weld portion of the core, when the annular core was used alone.

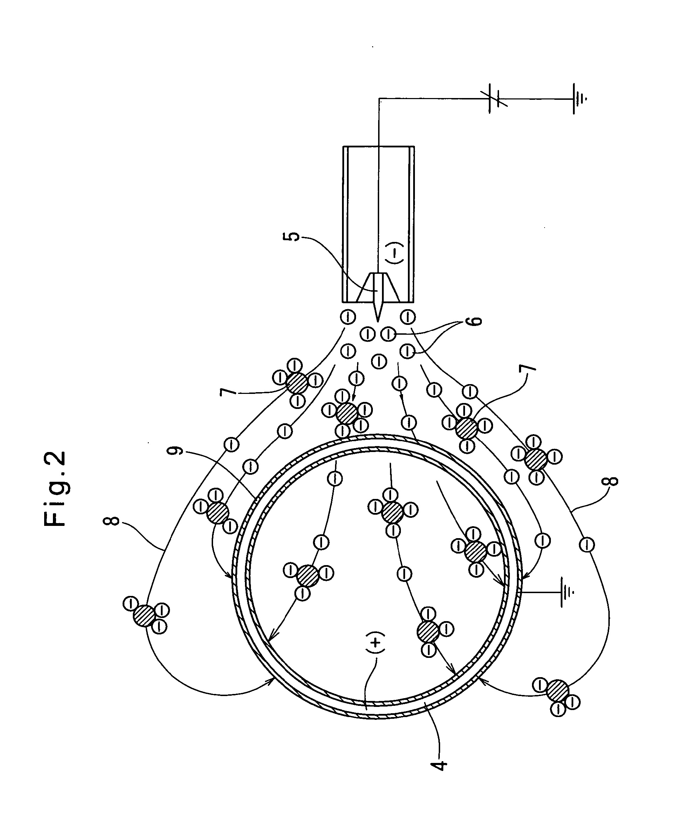

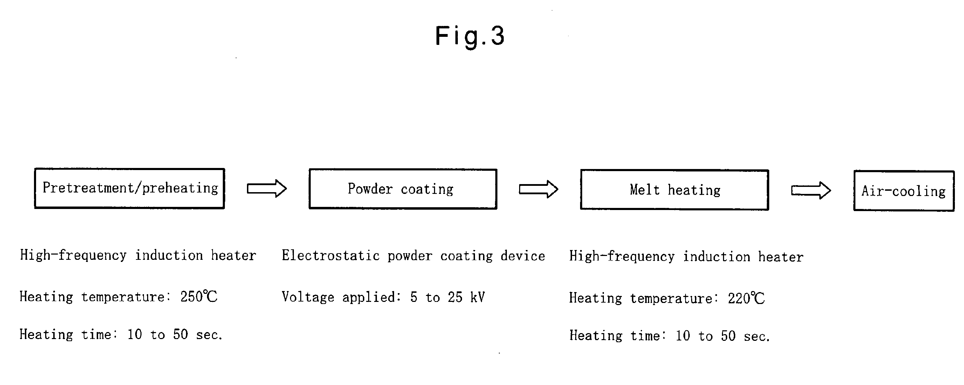

In electrostatic powder coating carried out on some of the annular cores, as shown in Fig. 2, high voltage was applied to a corona discharge electrode 5 provided opposite to each annular core 4 to ionize air, charge coating powder particles 7 by colliding negative ions 6 against the coating powder particles 7, and move the charged powder particles 7 along electric lines of force 8, thereby forming a powder coating layer 9 on the surface of the annular core 4. The entire process is shown in Fig. 3 in which the annular core 4 is preheated, which also serves as pre-treatment, a powder coating is formed on the surface of the annular core in the above-described manner, and the coating is melted into a film and air-cooled. As the coating material used in the electrostatic powder coating, one having an electrical resistivity of 10¹⁰ to 10¹⁶ Ωcm is selected. Any of the coating materials applied to the respective annular cores has adhesion to at least one of metal and rubber.

Wrap wires were wrapped around the respective annular cores in different twist structures (see Table 2). At that time, evaluation was made on the wrapping properties of the wrap wires.

**Table 1**

| | | Chemical composition (Wt%) | | | | | | | |
|---|---|---|---|---|---|---|---|---|---|
| Specimen | Material | C | Si | Mn | P | S | Cr | Other 1 | Other 2 |
| A | Mild steel | 0.08 | 0.18 | 0.43 | 0.014 | 0.005 | - | - | - |
| B | High-carbon steel | 0.82 | 0.19 | 0.51 | 0.016 | 0.004 | - | - | - |
| C | Medium carbon steel | 0.51 | 0.22 | 0.46 | 0.014 | 0.006 | - | - | - |
| D | Alloy steel | 0.17 | 0.93 | 1.50 | 0.013 | 0.006 | 0.41 | Ti : 0.08 | Al : 0.03 |

**Table 2**

| Specimen | Twist structure | Core dia. (mm) | Wrap wire | | Inner dia. of bead cord (mm) |
|---|---|---|---|---|---|
| | | | Dia. (mm) | Number of wires as seen in cord section | |
| A | X | 2.2 | 1.4 | 8 | 361.0 |
| B | Y | 1.4 | 1.4 | 5 | 356.0 |
| C, D | Z | 1.5 | 1.3 | 6 | 356.6 |

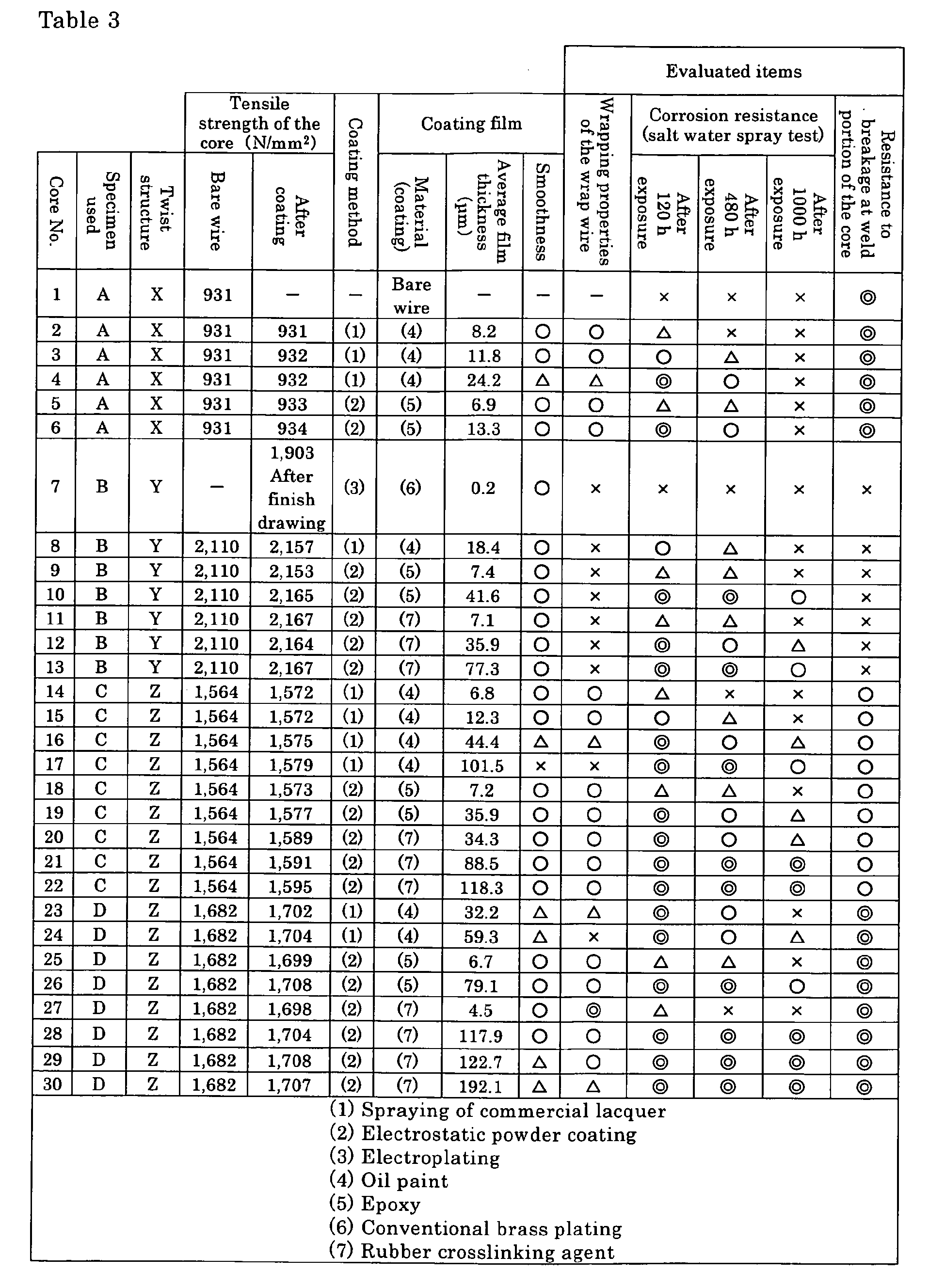

The various properties shown in Table 3 were determined or evaluated as follows.

### (1) Tensile strength of the core

Bare wire: Strength obtained by cold forming in an ordinary dry continuous wire drawing machine to an ordinary degree of drawing After coating: Value calculated from the breaking load measured after a coating is applied to a bare wire and the coating film is baked at 150 to 180°C to form a coated wire, and the wire diameter before coating

### (2) Average film thickness

Each coated wire obtained by baking after coating was cut at intervals of 2.5 cm into five samples, and the end surfaces of each sample were polished for cross-sectional observation. The coating was observed at four points that are angularly spaced apart from each other (at intervals of 90°) under an electron microscope to measure the thickness of the coating film. The average film thickness shown is the average of the thus measured film thicknesses of the five samples.

### (3) Smoothness of the coating film

For one of the five samples used in item (2) of which the difference between the maximum and minimum film thicknesses at the four points was the largest, the R value was measured. The symbols in Table 3 mean as follows:
○: R value was not more than 15 µm.
Δ: R value was within the range of 15 to 30 µm.
×: R value was higher than 30 µm.

### (4) Corrosion resistance of the core

Based on a salt water spray test under JIS Z 2371, evaluation was made separately for three stages of exposure times, i.e. 120 hours, 480 hours and 1000 hours as follows:
⊚: No rust was observed over the entire surface and over the entire length.
○: Rust was locally observed over the entire length and the rate of the surface area of the rusted portion was less than 10% relative to the entire surface area.
Δ: Rust was locally observed over the entire length and the rate of the surface area of the rusted portion was not less than 10% and less than 30% relative to the entire surface area.
×: Rust was locally observed over the entire length and the rate of the surface area of the rusted portion was over 30% relative to the entire surface area.

### (5) Resistance to breakage of the weld portion of the core

For each Core No. in Table 3, 20 steel wires were prepared and their ends were welded together at an ambient temperature of 30°C, and after being left for a week, the number of steel wires that did not break when a bending load was applied to the weld portion was measured. The symbols in Table 3 mean as follows:
⊚: None of the 20 samples broke.
○: At least 18 samples did not break.
×: Less than 18 samples did not break.

### (6) Wrapping properties of the wrapping wire

For each Core No. in Table 30, 20 annular cores were prepared, and a wrapping wire was wrapped around each of the 20 annular cores. The wrapping wires of the 20 samples were then visually checked to determine the number of samples of which the wrapping wires were uniformly wrapped around the core. The meanings of the symbols in Table 3 are as follows:
⊚: For all 20 samples, the wrapping wires were uniformly wrapped.
○: For more than 17 samples, the wrapping wires were uniformly wrapped.
Δ: For not less than 10 and less than 18 samples, the wrapping wires were uniformly wrapped.
×: For less than 10 samples, the wrapping wires were uniformly wrapped.

As is apparent from Table 3, by forming the steel wire as the annular core from alloy steel or medium carbon steel, which have high weldability, and forming a corrosion-resistant coating film on the surface of the steel wire, it is possible to prevent breakage of the bead cord at its weld portions and to improve the strength and corrosion resistance of the bead cord. Also, by selecting an appropriate twist structure and increasing the smoothness of the surface of the coating film, it is possible to improve the wrapping properties of the wrap wire. In particular, six examples of which all the requirements according to the present invention, including the twist structure, are met (Core Nos. 19, 20, 21, 22, 26 and 28) showed excellent results in any of the three evaluated items, i.e. wrapping properties of the wrap wire, corrosion resistance and resistance to breakage. By using these preferable examples in vehicle tires, it is possible to improve the life span and performance of the tires.

In the embodiment, as the resin coating, epoxy was used alone. But the resin coating may be a mixture of epoxy and polyester of equal amounts, or may comprise acryl, polyester, etc. For special purposes, the resin coating may comprise nylon 11 or saponified EVA, which have excellent wear resistance and shock resistance.

## Claims

1. An annular concentric-lay bead cord comprising an annular core formed by connecting two ends of a steel wire together, a wrap wire helically wrapped around said annular core in a single or a plurality of layers, **characterized in that** a corrosion-resistant coating film is formed on the surface of the steel wire forming said annular core.

2. The annular concentric-lay bead cord of claim 1 wherein said coating film has a smooth surface.

3. The annular concentric-lay bead cord of claim 1 or 2 wherein said coating film is formed on the surface of the steel wire forming said annular core over the entire circumference thereof.

4. The annular concentric-lay bead cord of any of claims 1 to 3 wherein said coating film has adhesion to at least one of a metal and a rubber.

5. The annular concentric-lay bead cord of any of claims 1 to 4 wherein said coating film has a thickness of 10 to 200 µm.

6. The annular concentric-lay bead cord of any of claims 1 to 4 wherein said coating film has a thickness of 20 to 120 µm.

7. The annular concentric-lay bead cord of any of claims 1 to 6 wherein the steel wire forming said annular core is made of an alloy steel comprising 0.08 to 0.27 wt% of C; 0.50 to 2.00 wt% of Si; 0.50 to 2.00 wt% of Mn; 0.20 to 2.00 wt% of Cr; and 0.001 to 0.10 wt% of at least one of Al, Nb, Ti and V; the balance being Fe and inevitably mixed impurities.

8. The annular concentric-lay bead cord of any of claims 1 to 6 wherein the steel wire forming said annular core is made of carbon steel containing 0.28 to 0.56 wt% of C.

9. A method of manufacturing the annular concentric-lay bead cord of any of claims 1 to 8, **characterized in that** said coating film is formed on the steel wire forming said annular core by electrostatic powder coating.

10. The method of forming the annular concentric-lay bead cord of claim 9 wherein the coating material used in said electrostatic powder coating has an electrical resistivity of 10¹⁰ to 10¹⁶ Ωcm.
